(19) Europäisches Patentamt
European Patent Office
Office européen des brevets

(11) EP 4 306 224 B1

(12) # EUROPEAN PATENT SPECIFICATION

(45) Date of publication and mention of the grant of the patent:
**17.12.2025 Bulletin 2025/51**

(21) Application number: **22767013.0**

(22) Date of filing: **04.03.2022**

(51) International Patent Classification (IPC):
*C09D 5/00 (2006.01)* *C09D 7/63 (2018.01)*
*C09D 7/65 (2018.01)* *C09D 127/18 (2006.01)*
*C09D 127/20 (2006.01)* *C09D 179/08 (2006.01)*
*C09D 181/06 (2006.01)* *C08G 73/14 (2006.01)*
*C08L 27/18 (2006.01)* *C08L 27/20 (2006.01)*
*B05D 7/24 (2006.01)* *B32B 15/082 (2006.01)*
*B05D 1/36 (2006.01)* *B32B 27/30 (2006.01)*
*C08L 79/08 (2006.01)*

(52) Cooperative Patent Classification (CPC):
(C-Sets available)
**C08G 73/14; B05D 1/36; B05D 7/24; B32B 15/082; B32B 27/30; C08L 27/18; C08L 27/20; C08L 79/08; C09D 5/002; C09D 7/63; C09D 7/65; C09D 127/18; C09D 127/20; C09D 179/08; C09D 181/06** (Cont.)

(86) International application number:
**PCT/JP2022/009321**

(87) International publication number:
**WO 2022/191055 (15.09.2022 Gazette 2022/37)**

(54) **MELTABLE FLUORINE RESIN PRIMER**
SCHMELZBARE FLUORHARZGRUNDIERUNG
AMORCE EN RÉSINE FLUORÉE FUSIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2021 JP 2021037541**

(43) Date of publication of application:
**17.01.2024 Bulletin 2024/03**

(73) Proprietor: **Daikin Industries, Ltd.**
**Osaka-shi, Osaka 530-0001 (JP)**

(72) Inventors:
- **IMADA, Hirotake**
**Osaka-Shi, Osaka 530-0001 (JP)**
- **NAKATANI, Yasukazu**
**Osaka-Shi, Osaka 530-0001 (JP)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 385 326** **EP-A1- 3 594 285**
**WO-A1-2007/119450** **WO-A1-2021/021768**
**JP-A- 2004 204 073** **JP-A- S5 374 532**
**JP-B2- 4 207 569** **US-A- 5 922 468**
**US-A1- 2011 041 924**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 27/18, C08L 79/08;**
**C08L 27/18, C08L 81/06;**
**C08L 27/20, C08L 79/08;**
**C08L 27/20, C08L 81/06;**
**C09D 127/18, C08L 79/08;**
**C09D 127/18, C08L 81/06;**
**C09D 127/20, C08L 79/08;**
**C09D 127/20, C08L 81/06**

## Description

### Technical Field

The present disclosure relates to a meltable fluororesin primer.

### Background Art

In general, a fluororesin, particularly a perfluoropolymer has been widely used as a coating material for a corrosion-resistant lining in chemical factories and semiconductor factories, taking advantage of the excellent heat resistance, chemical resistance, flame retardance or the like of the fluororesin. However, since the perfluoropolymer is poor in adhesion to a metal, a primer layer excellent in adhesion to a metal substrate has been, in many cases, provided on the surface of the metal substrate as an undercoat layer for the topcoat layer formed of the perfluoropolymer.

Various type of primers which adhere various metal substrates to a topcoat layer of 50 μm or more in thickness comprising a meltable perfluoropolymer such as tetrafluoroethylene/perfluoroalkyl vinyl ether copolymer (PFA) particles or a tetrafluoroethylene/hexafluoropropylene copolymer (FEP) particles, as a main component has been conventionally known. Examples of the primer include a primer comprising an organic solvent as a dispersion medium and a primer in powder form containing an amide-based resin as a main component of a binder resin.

Patent Literature 1 discloses a primer composition for covering a fluororesin, comprising a polyethersulfone, a polyamideimide and/or a polyimide, a fluororesin and a metal powder, dissolved or dispersed in an organic solvent.

Patent Literature 2 discloses a primer composition containing a polyarylketone-based resin, a titanium organic compound and a fluororesin, characterized in that the titanium organic compound contains titanium in a specific titanium content.

Patent Literature 3 discloses a primer for ETFE coating materials comprising an ethylene/tetrafluoroethylene copolymer (ETFE) particles; at least one heat-resistant resin selected from the group consisting of polyamideimide resins, polyethersulfone resins and polyimide resins; and a polyoxyethylene alkyl ether surfactant.

### Citation List

#### Patent Literature

Patent Literature 1: Japanese Patent Laid-Open No. 6-264000

Patent Literature 2: Japanese Patent Laid-Open No. 2010-83924

Patent Literature 3: Japanese Patent No. 6753546 Further relevant patent literature: US 5 922 468 discloses fluoropolymer aqueous dispersion comprising a FEP copolymer, a polyamideimide, an acetylenic diol-based surfactant and a polyoxyalkylene alkyl phenyl ether surfactant in water.

### Summary of Invention

#### Technical Problem

An object of the present disclosure is to provide a meltable fluororesin primer capable of providing a high adhesion strength between an object to be coated such as a metal substrate and a topcoat layer comprising a meltable perfluoropolymer.

#### Solution to Problem

The present disclosure is a meltable fluororesin primer comprising a tetrafluoroethylene/hexafluoropropylene copolymer (FEP) particles, a heat-resistant resin, a nonionic surfactant, an acetylenic diol-based surfactant and water, wherein: the FEP particles have an average particle size of 10 to 60 μm; the heat-resistant resin is at least one selected from the group consisting of polyamideimide resins, polyethersulfone resins and polyimide resins; the solid content mass ratio between the FEP particles and the heat-resistant resin is 50:50 to 95:5; the nonionic surfactant is a polyoxyethylene alkyl ether surfactant; and the meltable fluororesin primer comprises 10 to 60% by mass of water based on the meltable fluororesin primer.

The FEP particles preferably have a melt flow rate of 0.1 to 50 g/10 min.

The meltable fluororesin primer preferably further comprises 0.001 to 5% by mass of a heat stabilizer based on

the solid content of the FEP particles.

The present disclosure is also a primer film formed from the above-described meltable fluororesin primer.

The present disclosure is also a laminate having a film comprising a meltable perfluoropolymer provided on the above-described primer film.

The present disclosure is also a coated article having the above-described laminate provided on a metal substrate.

The present disclosure is also a coated article having the above-described laminate provided on the inner surface of a metal substrate, wherein the metal substrate is piping, a pipe or a duct.

Advantageous Effects of Invention

The present disclosure can provide a high adhesion strength between an object to be coated such as a metal substrate and a topcoat layer comprising a meltable perfluoropolymer. The present disclosure can also provide a meltable fluororesin primer, with improved dispersion stability in a water-based primer comprising water as a dispersion medium.

Description of Embodiments

The present disclosure will be described in detail below.

The meltable fluororesin primer of the present disclosure comprises a tetrafluoroethylene (TFE) /hexafluoropropylene (HFP) copolymer (FEP) particles, a heat-resistant resin, a nonionic surfactant, an acetylenic diol-based surfactant and water, wherein: the FEP particles have an average particle size of 10 to 60 μm; the heat-resistant resin is at least one selected from the group consisting of polyamideimide resins, polyethersulfone resins and polyimide resins; the solid content mass ratio between the FEP particles and the heat-resistant resin is 50:50 to 95:5; the nonionic surfactant is a polyoxyethylene alkyl ether surfactant; and the meltable fluororesin primer comprises 10 to 60% by mass of water based on the meltable fluororesin primer.

There is a market need to use a primer in liquid form instead of a primer in powder form for reasons of holding facilities or the like. When a liquid primer is used, it is desirably a water-based primer. However, a primer comprising water as a dispersion medium has a problem with the dispersion stability of meltable fluororesin particles.

The present disclosure provides a meltable fluororesin primer, with improved dispersion stability in a water-based primer comprising water as a dispersion medium.

FEP particles are suitable for use as a primer, because an FEP has a relatively high heat resistance, corrosion resistance and flame retardance among meltable fluororesins and has a relatively low melting point among perfluoropolymers.

In order to provide a high adhesion strength between an object to be coated and a topcoat layer formed of a meltable perfluoropolymer, it is also necessary to use FEP particles with a large particle size.

However, among meltable fluororesin particle types, the FEP particles are particularly high in hydrophobicity, and when the particle size is as large as 10 to 60 μm, they are extremely difficult to disperse in water. The meltable fluororesin primer of the present disclosure comprises a polyoxyethylene alkyl ether surfactant as a nonionic surfactant, thereby realizing an excellent dispersion stability of the FEP particles in the primer.

The FEP particles have an average particle size of 10 to 60 μm, as described above. If the average particle size is too small, a high adhesion strength cannot be provided between the object to be coated and the topcoat layer formed of the meltable perfluoropolymer through a film of the primer. In contrast, if the average particle size is too large, it is difficult to form a uniform film of the primer, and the adhesion strength between the primer film and the topcoat layer may partially decrease. In addition, sedimentation of the particles becomes significant, and the dispersion stability of the particles on standing cannot be maintained. The lower limit of the average particle size is preferably 11 μm and more preferably 15 μm, and the upper limit is preferably 50 μm.

The above-described average particle size is a volume median particle size as measured by a laser diffraction method with a particle size distribution measuring device [trade name: Microtrac MT-3300II].

The FEP preferably has a melt flow rate (MFR) of 0.1 to 50 g/10 min. If the melt flow rate is within the above range, the adhesion between the resulting primer film and the meltable perfluoropolymer film is further improved due to the flow characteristics of the FEP particles. Then, the primer film is less susceptible to stress cracking, leading to improvement in corrosion resistance. The lower limit of the melt flow rate is more preferably 0.5 g/10 min, and the upper limit is more preferably 30 g/10 min.

As used herein, the MFR of the FEP refers to the weight of the FEP extruded from a nozzle of 2 mm in diameter under a load of 2.16 kg at a temperature of 372°C for 10 minutes in accordance with ASTM D2116.

The above FEP can have a melt flow rate within the above range by adjusting the copolymerization composition and molecular weight thereof as described later.

The FEP is not limited, but is preferably a copolymer having a molar ratio of a TFE unit to a HFP unit (TFE unit/HFP

unit) of 70/30 or more and less than 99/1. The molar ratio is more preferably 70/30 or more and 98.9/1.1 or less, and even more preferably 80/20 or more and 98.9/1.1 or less. If the content of the TFE unit is too small, the mechanical properties tend to deteriorate, and if the content of the TFE unit is too large, the melting point tends to be too high and the formability tends to deteriorate.

The FEP resin may be a resin having the other monomer(s) further polymerized therewith as long as it has the composition described above. Examples of the other monomers include perfluoroalkyl vinyl ether (PAVE).

The other monomer(s) is/are usually preferably 15 mol % or less of the FEP resin. The upper limit of the content of the other monomer(s) is more preferably 10 mol%, and even more preferably 5 mol%.

The method for producing the FEP particles is not limited, and for example, the FEP particles can be obtained by copolymerization using any conventionally known polymerization method such as emulsion polymerization method. The FEP particles obtained by copolymerization is optionally milled so as to provide FEP particles having an average particle size within the above-described range. The milling method is not limited, and can, for example, be any conventionally known method. Examples of the milling method include a method comprising compressing the FEP dry powder obtained by the emulsion polymerization method into a sheet with rolls, milling it with a mill to obtain particles, and classifying them. When the FEP is obtained using an emulsion polymerization method or a suspension polymerization method, it may be used as a dispersion without isolating only the resulting resin component as long as it satisfies each of the above conditions.

The above-described polyoxyethylene alkyl ether surfactant is preferably of the formula:

R-O-A-H

wherein R represents a linear or branched alkyl group having 5 to 18 carbon atoms, and A represents a polyoxyethylene chain having 5 to 20 oxyethylene groups.

The alkyl group represented by R has more preferably 10 to 16 carbon atoms.

Illustrative examples of the alkyl group include a decyl group, a lauryl group, a tridecyl group, a cetyl group and a stearyl group, which may be linear or branched.

The polyoxyethylene chain has more preferably 7 to 15 oxyethylene groups.

The polyoxyethylene alkyl ether surfactant presented by the above formula in which R represents an alkyl group having 10 to 16 carbon atoms and the polyoxyalkylene chain has 7 to 15 oxyethylene groups is preferable, from the viewpoints that it is excellent in surface activity, soluble in water and easily available. A raw material for producing this surfactant may be a natural or synthetic higher alcohol, and preferably contain no alkylphenol.

The content of the polyoxyethylene alkyl ether surfactant is preferably 1.0 to 20.0% by mass based on the FEP particles. The content is more preferably 3.0% by mass or more, and even more preferably 5.0% by mass or more. The content is also more preferably 15.0% by mass or less, and even more preferably 10.0% by mass or less.

When the content of the polyoxyethylene alkyl ether surfactant is within this range, a primer excellent in dispersion stability of the FEP particles can be obtained.

The polyoxyethylene alkyl ether surfactant preferably has an HLB of 10 to 15. The HLB is more preferably in the range of 12 to 14. When the HLB is within this range, the fluororesin particles can be stably dispersed in water.

As used herein, the HLB refers to a value defined by the following calculation formula according to the Griffin method:

$$\text{HLB value} = 20 \times [\text{sum of chemical formula weights of hydrophilic moieties}]/\text{molecular weight}.$$

Since the polyoxyethylene alkyl ether surfactant is easily decomposed thermally and less likely remains in a coating film after baking, it is less likely to interfere with the adhesion effect caused by the FEP particles and the heat-resistant resin in the resulting primer film. Therefore, the adhesion of the primer film to the object to be coated and the meltable perfluoropolymer film is improved.

The meltable fluororesin primers of the present disclosure comprises a heat-resistance resin. The heat-resistant resin is at least one selected from the group consisting of polyamideimide resins (PAI), polyethersulfone resins (PES) and polyimide resins (PI). Among the heat-resistant resins, PAI is preferable from the viewpoint of heat resistance.

The PAI is a resin formed of a polymer having an amide bond and an imide bond in its molecular structure. The PAI is not limited, and examples of the PAI include a resin formed of a high molecular weight polymer obtained by each of various reactions such as a reaction of an aromatic diamine having an amide bond in its molecule with an aromatic tetracarboxylic acid such as pyromellitic acid; a reaction of an aromatic tricarboxylic acid such as trimellitic anhydride with a diamine such as 4,4-diaminophenyl ether or a diisocyanate such as diphenylmethane diisocyanate; and a reaction of a dibasic acid having an aromatic imide ring in its molecule with a diamine. The PAI is preferably formed of a polymer having an aromatic ring in its main chain, from the viewpoint that it is excellent in heat resistance.

The PES is a resin formed of a polymer having a repeating unit represented by the following formula:

[Formula 1]

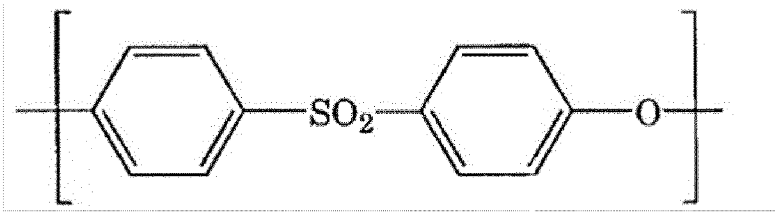

The PES is not limited, and examples of the PES include a resin formed of a polymer obtained by polycondensation of dichlorodiphenyl sulfone and bisphenol.

The PI is a resin formed of a polymer having an imide bond in its molecular structure. The PI is not limited, and examples of the PI include a resin formed of a high molecular weight polymer obtained by a reaction of an aromatic tetracarboxylic anhydride such as pyromellitic anhydride with a diamine such as 4,4-diaminophenyl ether. The PI is preferably formed of a polymer having an aromatic ring in its main chain, from the viewpoint that it is excellent in heat resistance.

The heat-resistant resin is suitably in particle form. Its average particle size is preferably 0.5 to 20 μm and more preferably 1 to 10 μm. When the average particle size of the heat-resistant resin particles is within this range, a uniform water dispersion can be obtained.

The above-described average particle size is a volume median particle size as measured by a laser diffraction method with a particle size distribution measuring device [trade name: Microtrac MT-3300II].

The solid content mass ratio between the FEP particles and the heat-resistant resin is 50:50 to 95:5. If the content of the FEP particles is too small, the adhesion between the resulting primer film and the meltable perfluoropolymer film deteriorates, resulting in delamination, and if the content of the FEP particles is too large, the adhesion between the primer film and an object to be coated deteriorates. The lower limit of the solid content mass ratio is preferably 70:30 and more preferably 76:24, and the upper limit is preferably 85:15.

The meltable fluororesin primer of the present disclosure comprises water. The water content is 10 to 60% by mass based on the meltable fluororesin primer.

The lower limit of the water content is more preferably 20% by mass and even more preferably 25% by mass. The upper limit of the water content is more preferably 50% by mass and even more preferably 40% by mass. When the water content is within this range, a uniform water dispersion can be obtained.

The meltable fluororesin primer of the present disclosure preferably further comprises at least one dispersion medium selected from the group consisting of acetylenic diol-based surfactants, alcohols, ketones, esters and aromatic hydrocarbons. The dispersion medium is an acetylenic diol-based surfactant from the viewpoint of the dispersion stability of the meltable fluororesin in water.

The acetylenic diol-based surfactant is a surfactant having a carbon-carbon triple bond in its molecule. Examples of the acetylenic diol-based surfactant include an acetylenic diol (having both an acetylenic bond and two hydroxyl groups in the same molecule) surfactant, and a surfactant with an alkylene oxide unit added to acetylenic diol.

Such an acetylenic diol-based surfactant can be specifically, for example, a compound represented by the following formula (1) and/or a compound represented by the following formulas (2):

[Formula 2]

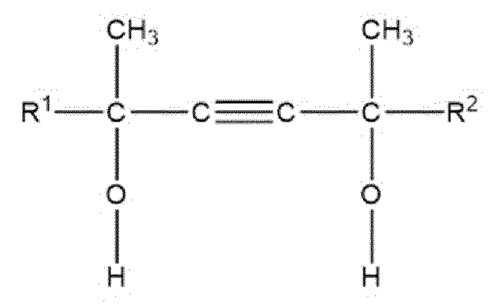

(1)

[Formula 3]

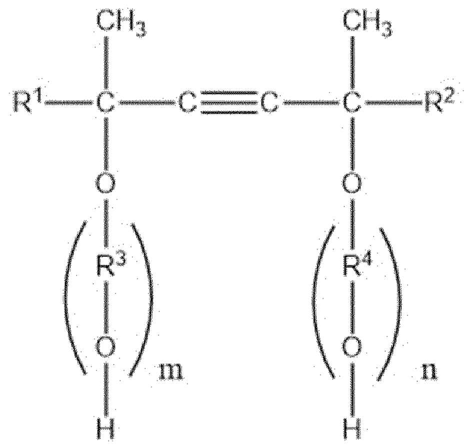

(2)

wherein $R^1$ and $R^2$ each independently represent an alkyl group having 3 to 9 carbon atoms, $R^3$ and $R^4$ each independently represent an alkylene group having 1 to 4 carbon atoms, and m and n are an integer and the sum of m and n is 2 to 50.

The residual mass of the acetylenic diol-based surfactant is preferably 3.0% by mass or more as measured at 300°C by thermogravimetric analysis. The acetylenic diol-based surfactant with a residual mass of 3.0 mass% or more as measured at 300°C by thermogravimetric analysis is preferably used, because even if heating is performed at a high temperature during thermal melting, the acetylenic diol-based surfactant can remain in a coating film and thereby exhibit various functions.

As used herein, the residual mass percentage at 300°C refers to a residual mass percentage of a sample remaining at 300°C after 10 mg of the sample is heated from room temperature to 300°C at a heating rate of 10°C/minute with a thermogravimeter-differential thermal analyzer [TG-DTA] (trade name: TG/DTA7200; manufactured by Hitachi High-Tech Science Corporation).

In the present disclosure, the acetylenic diol-based surfactant is preferably an ethylene oxide adduct of acetylenic diol represented by the general formula (2). The ethylene oxide adduct of acetylenic diol is preferable, in that it easily satisfies the condition of the residual mass of 3.0 mass% or more as measured at 300°C by thermogravimetric analysis and it can thereby provide good effects even when it is heated and cured at a high temperature.

The acetylenic diol-based surfactant may be a commercially available product. Examples of the acetylenic diol-based surfactant include SURFYNOL (R) 440, SURFYNOL (R) 465, SURFYNOL (R) 485, SURFYNOL (R) SE and SURFYNOL (R) 2502, and OLFINE (R) PD-002W, OLFINE (R) EXP. 4200, OLFINE (R) E1004 and OLFINE (R) E1010 (all manufactured by Nissin Chemical Industry Co., Ltd.); and ACETYLENOL (R) E00, ACETYLENOL (R) E13T, ACETYLENOL (R) E40, ACETYLENOL (R) E60, ACETYLENOL (R) E100 and ACETYLENOL (R) E200 (all manufactured by Kawaken Fine Chemicals Co., Ltd.).

The acetylenic diol-based surfactant preferably has a HLB of more than 4, and more preferably 5 or more. The HLB is even more preferably 6 or more, and most preferably 8 or more.

The acetylenic diol-based surfactant having a high HLB is excellent in heat resistance.

As used herein, the HLB refers to a value defined by the following calculation formula according to the Griffin method:

HLB value = 20 × [sum of chemical formula weights of hydrophilic moieties]/molecular weight.

The content of the acetylenic diol-based surfactant in the meltable perfluoropolymer primer of the present disclosure is preferably 0.05 to 5.0% by mass based on the FEP particles. The lower limit of the content of the acetylenic diol-based surfactant is more preferably 0.1% by mass, and even more preferably 0.5% by mass. The upper limit of the content of the acetylenic diol-based surfactant is more preferably 3.5% by mass and even more preferably 2.8% by mass. When the content of the acetylenic diol-based surfactant is within this range, the meltable perfluoropolymer primer is good in dispersion stability.

The meltable fluororesin primer of the present disclosure may further comprise a heat-resistant resin dissolving solvent for dissolving the heat-resistant resin. When the heat-resistant resin is to be dissolved in the heat-resistant resin dissolving solvent and uniformly dispersed it in the meltable fluororesin primer, the heat-resistant resin can be applied on the object to be coated to spread it all over the object to be coated, so that adhesion with the object to be coated can be

improved.

The heat-resistant resin dissolving solvent may be a solvent capable of dissolving the heat-resistant resin and is preferably that having a boiling point of 100°C or more at 1 atmosphere (atm).

Examples of the heat-resistant resin dissolving solvent include N-methyl-2-pyrrolidone, N-ethyl-2-pyrrolidone, N-butyl-2-pyrrolidone, a 3-alkoxy-N,N-dimethylpropanamide, dimethylsulfoxide, 1,3-dimethyl-2-imidazolidinone, 3-methyl-2-oxazolidinone, N-formylmorpholine, N-acetylmorpholine, dimethylpropylene urea, anisole, diethyl ether, ethylene glycol, acetophenone, methyl ethyl ketone, methyl isobutyl ketone, cyclohexanone, cyclopentanone, xylene, toluene, ethanol and 2-propanol.

Among others, it is more preferably at least one selected from the group consisting of N-ethyl-2-pyrrolidone, N-butyl-2-pyrrolidone, 3-alkoxy-N,N-dimethylpropanamide, 1,3-dimethyl-2-imidazolidinone, 3-methyl-2-oxazolidinone, N-formylmorpholine, N-acetylmorpholine and dimethylpropylene urea.

The 3-alkoxy-N,N-dimethylpropanamide is represented by $N(CH_3)_2COCH_2CH_2OR^{11}$ wherein $R^{11}$ represents an alkyl group. The alkoxyl group ($R^{11}O$ group) is not limited, but is preferably an alkoxy group containing a lower alkyl group having 1 to 6 carbon atoms, and more preferably a methoxy group, an ethoxy group, a propoxy group or a butoxy group. The 3-alkoxy-N,N-dimethylpropanamide is particularly preferably 3-methoxy-N,N-dimethylpropanamide ($N(CH_3)_2COCH_2CH_2OCH_3$).

The heat-resistant resin dissolving solvent is preferably 10% by mass or more based on the heat-resistant resin. When the heat-resistant resin dissolving solvent is within the above range, the heat-resistant resin is more easily spread on the object to be coated, and adhesion to the object to be coated is more easily improved. The lower limit is more preferably 50% by mass. Adhesion to the object to be coated tends to be improved as the amount of the heat-resistant resin dissolving solvent increases, but the upper limit is preferably 500% by mass and more preferably 350% by mass from the viewpoint of industrial production.

The total amount of N-methyl-2-pyrrolidone, N,N-dimethylacetamide, N,N-dimethylformamide and γ-butyrolactone in the meltable fluororesin primer of the present disclosure is preferably less than 0.1 mass % based on the meltable fluororesin coating material primer. The total amount is more preferably less than 0.01% by mass, and even more preferably less than 0.001% by mass.

The above total amount is a value measured by liquid chromatography.

The meltable fluororesin primer of the present disclosure preferably comprises none of N-methyl-2-pyrrolidone, N,N-dimethylacetamide, N,N-dimethylformamide and γ-butyrolactone.

The meltable fluororesin primer of the present disclosure may further comprise a heat stabilizer. When the meltable fluororesin primer of the present disclosure comprises the heat stabilizer, the meltable fluororesin primer can prevent the FEP and the heat-resistant resin from being oxidized due to heating or the like during formation of the meltable fluororesin film and can thereby reduce thermal deterioration, resulting in further improvement in adhesion stability.

The heat stabilizer is preferably an amine-type antioxidant and/or an organic sulfur-containing compound from the viewpoint of preventing oxidation of the FEP and the heat-resistant resin.

Examples of the amine-type antioxidant include an aromatic amine having an aromatic hydrocarbon group such as a phenyl group or naphthyl group in its molecule, for example, phenylenediamine compounds such as N,N'-diphenyl-p-phenylenediamine, N,N'-di-2-naphthyl-p-phenylenediamine and a reaction product of diphenylamine and diisobutylene; and other aromatic secondary amine compounds such as dinaphthylamine, phenyl-α-naphthylamine, phenyl-β-naphthylamine, 4,4'-bis(α,α'-dimethylbenzyl)diphenylamine, phenylcyclohexyl-p-phenylenediamine and styrenated diphenylamine.

Examples of the amine-type antioxidant include a benzotriazole-based compound having a chemical structure with benzotriazole as a basic skeleton, which may be in the form of a metal salt thereof. The benzotriazole-based compound is not limited, and examples thereof include benzotriazole, 2-(2-hydroxy-5-methylphenyl)benzotriazole and 2-(2-hydroxy-5-tetraoctylphenyl)benzotriazole.

Examples of the organic sulfur-containing compound include mercaptobenzimidazole-based compounds such as 2-mercaptobenzimidazole and 2-mercaptomethylbenzimidazole; mercaptobenzothiazole-based compounds such as 2-mercaptobenzothiazole, a cyclohexylamine salt of 2-mercaptobenzothiazole, dibenzothiazyl disulfide, 2-(N,N'-diethylthiocarbamoylthio)benzothiazole, 2-(4'-morpholinodithio)benzothiazole, N-cyclohexyl-2-benzothiazolylsulfenamide, N-oxydiethylene-2-benzothiazolylsulfenamide, N-tert-butyl-2-benzothiazolylsulfenamide, N,N'-dicyclohexyl-2-benzothiazolylsulfenamide and N,N'-diisopropylbenzothiazole-2-sulphene; mercaptoimidazoline-based compounds such as 2-mercaptoimidazoline; and dithiocarbamic acids such as pentamethylenedithiocarbamic acid, pipecolyldithiocarbamic acid, dimethyldithiocarbamic acid, diethyldithiocarbamic acid, dibutyldithiocarbamic acid and N-ethyl-N-phenyldithiocarbamic acid, each of which may be in the form of a salt thereof with a metal such as a Zn, Sn, Cd, Cu or Fe or an organic salt thereof such as a piperidine salt or a pipecolyl salt thereof.

Examples of the organic sulfur-containing compound include thiuram-based compounds, for example, thiuram monosulfides such as tetramethylthiuram monosulfide; thiuram disulfides such as tetramethylthiuram disulfide, tetraethylthiuram disulfide and tetrabutylthiuram disulfide; and other thiuram-based compounds such as dipentamethylenethiuram tetrasulfide.

The organic sulfur-containing compound is also preferably, for example, thiourea in which at least one hydrogen atom bonded to a nitrogen atom constituting the thiourea may be replaced by a saturated or unsaturated hydrocarbon group having 1 to 6 carbon atoms, and it may be thiourea, a thiourea derivatives such as N,N'-diethylthiourea, N,N'-dibutylthiourea, dilaurylthiourea or N,N'-diphenylthiourea, and the like.

The heat stabilizer is particularly preferably an aromatic ring-containing compound and more preferably an aromatic amine, a mercaptobenzothiazole-based compound and a mercaptobenzimidazole-based compound, because the heat stabilizer is required to be stable at a high temperature not less than the temperature near the melting point of the meltable fluororesin contained in the meltable fluororesin primer of the present disclosure or the meltable perfluoropolymer coating material constituting the topcoat, for example at a high temperature of about 250°C or more.

The heat stabilizer can be produced by any conventionally known method, but may usually be a commercially available product.

The heat stabilizer may be used alone or in combination of two or more thereof. When two or more heat stabilizers are used in combination, the mass thereof is the total mass of all heat stabilizers combined.

When the heat stabilizer is contained in the meltable fluororesin primer of the present disclosure, the content of the heat stabilizer is preferably 0.001 to 5% by mass based on the solid content of the FEP particles, from the viewpoint of heat stabilization effect and prevention of foaming caused by its decomposition. The lower limit is more preferably 0.003% by mass, and the upper limit is more preferably 2% by mass.

The meltable fluororesin primer of the present disclosure may optionally further comprise an additive. The additive is not limited, and examples thereof include those used in primers for general coating materials. Examples of the additive include a pigment, a filler, a leveling agent, a solid lubricant, a suspending agent, a moisture absorber, a surface modifier, a thixotropic agent, a viscosity modifier, an anti-gelling agent, a UV absorber, a light stabilizer, a plasticizer, an anti-flooding agent, an anti-skinning agent, an anti-scratch agent, an anti-mold agent, an antimicrobial agent, an antioxidant, an antistatic agent and a silane coupling agent.

Specific example of the additive include a coloring pigment such as carbon, titanium oxide, red iron oxide or mica; an anticorrosive pigment, a calcined pigment, an extender pigment, a glittering flat pigment, a flake pigment, wood powder, quartz sand, carbon black, clay, talc, diamond, fluorinated diamond, corundum, silica stone, boron nitride, boron carbide, silicon carbide, fused alumina, tourmaline, jade, germanium, zirconium oxide, zirconium carbide, chrysoberyl, topaz, beryl, garnet, glass, glass powder, mica powder, metal powder (such as gold, silver, copper, platinum, stainless steel or aluminum powder), various reinforcing materials, various extenders and a conductive filler.

The content of the additive is preferably 0 to 10.0% by mass and more preferably 0 to 5.0% by mass, based on the meltable fluororesin primer.

The meltable fluororesin primer of the present disclosure is prepared, for example, by any conventionally known method. Examples of the method include a method comprising mixing the above-described FEP particles, heat-resistant resin and nonionic surfactant and water, and optionally a dispersion medium and/or a heat stabilizer or the like; optionally further adding the above-described heat-resistant resin dissolving solvent thereto; and dispersing it while stirring.

The meltable fluororesin primer of the present disclosure is directed toward forming a primer film to be provided under a film of the meltable perfluoropolymer, and is preferably directed toward forming the primer film to be provided in direct contact with and under the film of the meltable perfluoropolymer. As used herein, the phrase "under the film of the meltable perfluoropolymer" means between the film of the meltable perfluoropolymer and an object to be coated (substrate). The meltable perfluoropolymer film will be described later.

The primer film can be formed by applying the meltable fluororesin primer of the present disclosure on an object to be coated and, as appropriate, then drying and heating it.

The object to be coated is not limited as long as the film of the meltable perfluoropolymer can be formed thereon.

The meltable fluororesin primer of the present disclosure is preferably applied directly on a substrate made of a metallic or non-metallic inorganic material or applied on a layer formed of a heat-resistant resin (hereinafter also referred to as a heat-resistant layer), and more preferably directly applied on the substrate made of a metallic or non-metallic inorganic material.

Examples of the metal include an elemental metal such as iron, aluminum or copper, and an alloy thereof. Examples of the alloy include stainless steel (SUS). Examples of the non-metallic inorganic material include enamel, glass and ceramics. The substrate may comprise the other material(s) in addition to the metallic or non-metallic inorganic material.

The substrate is preferably made of a metal, and more preferably aluminum or stainless steel.

The meltable fluororesin primer of the present disclosure is particularly suitable for use in coating a metal substrate. Specific examples of the metal substrate include parts related to industrial applications such as piping, pipes and ducts. The meltable fluororesin primer is applied on the inner surface thereof. A meltable perfluoropolymer coating material is widely applied as a topcoat layer for applications requiring heat resistance, chemical resistance and flame retardance. However, in order to ensure adhesion between the metal substrate and the meltable perfluoropolymer film, it is

advantageous to use the meltable fluororesin primer of the present disclosure for the metal substrate, in that adhesion is provided while maintaining heat resistance, chemical resistance and flame retardance.

The object to be coated may be optionally previously subjected to surface treatment such as cleaning or sandblasting. The sandblasting is blowing sand such as silica sand or alumina powder, and it roughens the surface of the object to be coated. Therefore, the object to be coated is preferably subjected to the sandblasting from the viewpoint of improvement in adhesion.

The method of application to the object to be coated is not limited, but it can be appropriately selected depending on the form of the object to be coated or the like. Examples thereof include any conventionally known method such as spray coating, dip coating, brush coating or electrostatic coating. The application can be performed so that the dry film thickness is 5 to 100 μm. The application may be performed while heating, and it is preferably performed for example, at 60 to 120°C. The heating may be preceded by drying at room temperature, and the heating conditions can be relaxed by the drying.

The present disclosure also relates to a primer film formed from the meltable fluororesin primer of the present disclosure.

The primer film of the present disclosure is excellent in adhesion to the object to be coated and the film of the meltable perfluoropolymer.

The thickness of the primer film is suitably 5 to 100 μm. More preferably, it is 20 to 80 μm.

The content of alkylphenols in the primer film of the present disclosure is preferably 0.10 ppm by mass or less, more preferably 0.05 ppm by mass or less, and even more preferably less than 0.05 ppm by mass, based on the primer film. The primer film preferably comprises no alkylphenols.

As used herein, the content of alkylphenols refers to a value determined by liquid chromatography.

A meltable perfluoropolymer coating material can be applied on the primer film followed by heating and baking to form a meltable perfluoropolymer film.

The present disclosure is also a laminate having a film comprising a meltable perfluoropolymer provided on the primer film.

The meltable perfluoropolymer coating material comprises, but is not limited to, a meltable perfluoropolymer as a main component and optionally the other component(s) such as an additive as appropriate.

Examples of the meltable perfluoropolymer include a tetrafluoroethylene/hexafluoropropylene copolymer [FEP] and a tetrafluoroethylene/perfluoro(alkyl vinyl ether) copolymer [PFA]. The meltable perfluoropolymer comprises the above-described perfluoromonomer as a monomer component. The meltable perfluoropolymer coating material comprises one or more of the meltable perfluoropolymers.

The meltable perfluoropolymer is necessary to be meltable. When the meltable perfluoropolymer is meltable, it can be molten by baking, which is described later, to form a film.

The meltability of the meltable perfluoropolymer is generally expressed by MFR as an index of flowability. The MFR is represented by the weight of the FEP extruded from a nozzle of 2 mm in diameter under a predetermined load for 10 minutes in accordance with ASTM D2116 for the FEP or in accordance with ASTM D3307 for the PFA. The MFR is measured at 372°C. The MFR of the meltable perfluoropolymer is preferably 0.1 to 100 g/10 min, from the viewpoint of the leveling properties, coating film strength or the like of the coating film obtained by coating the meltable perfluoropolymer coating material according to the present disclosure. The lower limit is more preferably 0.5 g/10 min, and the upper limit is more preferably 50 g/10 min.

The meltable perfluoropolymer coating material is preferably a powder coating material. The method for producing a powder coating material is not limited, and examples thereof include any conventionally known methods. The method can be a method of milling after optionally melting and kneading the meltable perfluoropolymer and the other component(s); and a method in which milling and classifying are performed by the method described above for the method of milling FEP particles; or the like.

However, if the method of producing a powder coating material via the step of spray-drying a liquid dispersion of fluororesin particles is performed, a surfactant for stabilizing the liquid dispersion may remain in the powder coating material and also in the film formed by applying it. Such a method is not preferable because the resulting perfluoropolymer film is impaired in heat resistance and chemical resistance.

The powder coating material can be used as a powder coating material for forming a thin film, generally having a thickness of 20 to 100 μm, by an electrostatic coating method; a powder coating material for forming a thick film, generally having a thickness of 100 to 1500 μm, by an electrostatic coating method; a powder coating material for forming a thick film, generally having a thickness of 1000 to 5000 μm, by a rotolining method; or the like. In order to obtain a thick film by an electrostatic coating method, the step of applying the powder coating material to an object to be coated followed by heating and baking to form a film is often repeated two or more times.

The meltable perfluoropolymer contained in the powder coating material for forming a thin film by an electrostatic coating method preferably has an average particle size of 5 to 50 μm. If the average particle size is less than 5 μm, electrostatic repulsion is likely to occur during application and thereby tends to be difficult to obtain a smooth film. If the average particle size is more than 50 μm, it also tends to be difficult to obtain a smooth film. The average particle size is

more preferably in the range of 10 to 40 μm.

The meltable perfluoropolymer contained in the powder coating material for forming a thick film by an electrostatic coating method preferably has an average particle size of 20 to 100 μm. If the average particle size is less than 20 μm, it tends to be difficult to obtain a thick film. If the average particle size is more than 100 μm, the coating efficiency tends to decrease. The average particle size is more preferably in the range of 30 to 90 μm.

The meltable perfluoropolymer contained in the powder coating material for forming a thick film by a rotolining method preferably has an average particle size of 150 to 500 μm. If the average particle size is less than 150 μm or more than 500 μm, air bubbles tend to remain in the film, making it difficult to obtain a smooth film. The average particle size is more preferably in the range of 200 to 450 μm.

The average particle size of the above-described powder coating material is a volume median particle size as measured by a laser diffraction method with a particle size distribution measuring device [trade name: Microtrac MT-3300II].

The powder coating material used in the present disclosure can be used for various intended uses as a corrosion-resistant lining or the like, for example, by applying it to an object to be coated followed by heating and baking to form a film. The powder coating material used in the present disclosure can be a powder coating material suitable for the above-described coating method and for obtaining the above-described film thickness after baking by adjusting the average particle size, the melt flow rate or the like as described above within the scope of the present disclosure.

The present disclosure also relates to a coated article having, provided on an object to be coated, a laminate comprising a primer film of the present disclosure formed on the object to be coated and a meltable perfluoropolymer film formed on the primer film.

The coated article of the present disclosure is excellent in adhesion between the primer film and both of the object to be coated and the meltable perfluoropolymer film.

In particular, the present disclosure is also a coated article having the above-described laminate provided on a metal substrate. The coated article is preferably a coated article having the above-described laminate provided on the inner surface of a metal substrate such as piping, a pipe or a duct.

The object to be coated, the primer film and the meltable perfluoropolymer film are as described above.

In the coated article of the present disclosure, the object to be coated is preferably in direct contact with the primer film. In addition, the primer film is preferably in direct contact with the meltable perfluoropolymer film. Another layer may be further provided on the meltable perfluoropolymer film, but the meltable perfluoropolymer film is preferably the outermost layer.

## Examples

The present disclosure will be specifically described based on Examples below.

In the following Examples, "parts" and "%" represent "parts by mass" and "% by mass", respectively, unless otherwise specified.

### (Example 1)

In a stainless steel container were placed 33.0 g of FEP powder (MFR: 20 g/10 min; average particle size: 30 μm) ; 10.0 g of PAI particles with an average particle size of 1.5 μm, which are a milled product of polyamideimide (PAI, manufactured by Showa Denko Materials Co., Ltd.) as a heat-resistant resin; 1.90 g of a polyoxyethylene alkyl ether surfactant (manufactured by NOF CORPORATION); 1.0 g of an acetylenic diol-based surfactant (manufactured by Nissin Chemical Industry Co., Ltd.); and 25.0 g of pure water. The mixture was stirred well at 300 rpm for 20 minutes with a propeller stirrer, and 20.0 g of N-methyl-2-pyrrolidone (NMP) was then added thereto with stirring and dispersed well to obtain a primer for FEP coating material.

### (Example 2)

A primer for FEP coating material was obtained in the same manner as in Example 1 except that 36.1 g of FEP powder and 6.9 g of PAI particles were used.

### (Example 3)

A primer for FEP coating material was obtained in the same manner as in Example 1 except that PES particles with an average particle size of 5.0 μm, which are a milled product of polyethersulfone (PES, manufactured by SUMITOMO CHEMICAL COMPANY, LIMITED), was used instead of the polyamideimide as a heat-resistant resin.

(Example 4)

A primer for FEP coating material was obtained in the same manner as in Example 1 except that PI particles with an average particle size of 8.0 μm, which are a milled product of polyimide (PI, manufactured by Mitsubishi Gas Chemical Company, Inc.), was used instead of the polyamideimide as a heat-resistant resin.

(Example 5)

A primer for FEP coating material was obtained in the same manner as in Example 1 except that the amount of polyoxyethylene alkyl ether surfactant added was 6.0 g.

(Example 6)

A primer for FEP coating material was obtained in the same manner as in Example 1 except that only the polyoxyethylene alkyl ether surfactant was used as a surfactant.

(Example 7)

A primer for FEP coating material was obtained in the same manner as in Example 1 except that 3-methoxy-2-propionamide was used instead of N-methyl-2-pyrrolidone (NMP) .

(Example 8)

A primer for FEP coating material was obtained in the same manner as in Example 1 except that 0.5 g of an amine-type antioxidant (manufactured by Ouchi Shinko Chemical Industrial Co., Ltd.) was added.

(Comparative Example 1)

A primer for FEP coating material was obtained in the same manner as in Example 1 except that a polyoxyethylene alkylphenyl ether surfactant (manufactured by Sigma-Aldrich Japan) was used instead of the polyoxyethylene alkyl ether surfactant.

(Comparative Example 2)

A primer for FEP coating material was obtained in the same manner as in Example 1 except that 41.0 g of FEP powder and 2.0 g of PAI particles were used.

(Comparative Example 3)

A primer for FEP coating material was obtained in the same manner as in Example 1 except that 21.0 g of FEP powder and 22.0 g of PAI particles were used.

(Comparative Example 4)

A primer for FEP coating material was obtained in the same manner as in Example 1 except that the FEP powder had an average particle size of 5 μm.

(Evaluation method)

(Adhesion test of meltable fluororesin primer)

A degreased iron substrate (100 mm × 200 mm × 5 mm) was subjected to blasting with Tosa Emery (manufactured by Ujiden Chemical Industry Co., Ltd.) as 80 mesh alumina at a pressure of 0.5 MPa, and the blasted powder was removed with air. The substrate was coated with the meltable fluororesin primer obtained above by spraying so that the dry film thickness was 15 to 20 μm, and dried at 80°C for 30 minutes. Then, FEP powder coating material (MFR: 20 g/10 min; average particle size: 40 μm) was electrostatically coated thereon and sintered at 320°C for 30 minutes to obtain a coated product having a coating film thickness of about 800 μm provided thereon. This coating film was scored with a knife at a width of 10 mm, and subjected to a 90 degree peeling test at a speed of 50 mm/min with Autograph

DSC-500 manufactured by Shimadzu Corporation. In addition, the coated product, which had been immersed in boiling water at 98°C for 24 hours, was provided and was subjected to the peeling test under the same conditions. The results are shown in Table 1.

(Evaluation of sedimentation for meltable fluororesin primer)

Each 80 ml portion of the meltable fluororesin primer obtained above was placed in a 100 ml beaker, and the state of sedimentation of the particles was evaluated by visual observation and with a resin rod, immediately after stirring, 24 hours later or one week later. The results are shown in Table 1.

No sedimentation: No deposition was visually observed, and no deposition of particle components was observed on the bottom surface when stirred with a resin rod.

Slight sedimentation: No deposition was visually observed, but deposition of particle components was observed on the bottom surface when stirred with a resin rod.

Sedimentation: Deposition was visually observed and there was also deposition of particle components on the bottom surface when stirred with a resin rod.

(Evaluation of redispersibility for meltable fluororesin primer)

Each 80 ml portion of the meltable fluororesin primer obtained above was placed in a 100 ml beaker and allowed to stand for 24 hours or one week. Then, the meltable fluororesin primer was stirred with a resin rod and was subjected to the evaluation of redispersion. The results are shown in Table 1. It should be noted that no evaluation is indicated by the minus sign "-".

Good: Deposited particles were easily and uniformly dispersed.

Poor: Deposited particles were not easily and uniformly dispersed.

[Table1]

| | Adhesion (kg/cm) 90° Peeling | | Sedimentation | | | Redispersibility | |
|---|---|---|---|---|---|---|---|
| | Initial | 98°C hot water × 24 hours later | Immediately after stirring | 24 hours later | 1 week later | 24 hours later | 1 week later |
| Example 1 | 14 | 12 | No sedimentation | No sedimentation | Slight sedimentation | - | Good |
| Example 2 | 14 | 11 | No sedimentation | Slight sedimentation | Sedimentation | Good | Good |
| Example 3 | 13 | 10 | No sedimentation | No sedimentation | Slight sedimentation | - | Good |
| Example 4 | 14 | 11 | No sedimentation | No sedimentation | Slight sedimentation | - | Good |
| Example 5 | 14 | 10 | No sedimentation | No sedimentation | Slight sedimentation | - | Good |
| Example 6 | 14 | 10 | No sedimentation | Slight sedimentation | Sedimentation | Good | Good |
| Example 7 | 14 | 11 | No sedimentation | No sedimentation | Slight sedimentation | - | Good |
| Example 8 | 15 | 13 | No sedimentation | No sedimentation | Slight sedimentation | - | Good |
| Comparative Example 1 | 14 | 9 | No sedimentation | No sedimentation | Slight sedimentation | - | Good |
| Comparative Example 2 | 13 | 11 | Slight sedimentation | Sedimentatio n | - | Poor | Poor |

(continued)

| | Adhesion (kg/cm) 90° Peeling | | Sedimentation | | | Redispersibility | |
|---|---|---|---|---|---|---|---|
| | Initial | 98°C hot water × 24 hours later | Immediately after stirring | 24 hours later | 1 week later | 24 hours later | 1 week later |
| Comparative Example 3 | 9 | 3 | No sedimentation | No sedimentation | Slight sedimentation | - | Good |
| Comparative Example 4 | 6 | 2 | No sedimentation | No sedimentation | No sedimentation | - | - |

Industrial Applicability

Since the meltable fluororesin primer of the present disclosure has the features described above, it is excellent in dispersion stability in an aqueous system. Further, it can provide high adhesion strength between an object to be coated such as a metal substrate and a topcoat layer formed of a meltable perfluoropolymer coating material. It is particularly suitable as a meltable fluororesin primer for a metal substrate.

## Claims

**1.** A meltable fluororesin primer comprising a tetrafluoroethylene/hexafluoropropylene copolymer (FEP) particles, a heat-resistant resin, a nonionic surfactant, an acetylenic diol-based surfactant and water, wherein:

the FEP particles have an average particle size of 10 to 60 μm,wherein the average particle size is a volume median particle size as measured by a laser diffraction method;
the heat-resistant resin is at least one selected from the group consisting of polyamideimide resins, polyethersulfone resins and polyimide resins;
the solid content mass ratio between the FEP particles and the heat-resistant resin is 50:50 to 95:5;
the nonionic surfactant is a polyoxyethylene alkyl ether surfactant; and
the meltable fluororesin primer comprises 10 to 60% by mass of water based on the meltable fluororesin primer.

**2.** The meltable fluororesin primer according to claim 1, wherein the FEP particles have a melt flow rate of 0.1 to 50 g/10 min as measured in accordance with ASTM D2116

**3.** The meltable fluororesin primer according to any one of claims 1 or 2, further comprising 0.001 to 5% by mass of a heat stabilizer based on the solid content of the FEP particles.

**4.** A primer film formed from the meltable fluororesin primer according to any one of claims 1 to 3.

**5.** A laminate having a film comprising a meltable perfluoropolymer provided on the primer film according to claim 4.

**6.** A coated article having the laminate according to claim 5 provided on a metal substrate.

**7.** A coated article according to claim 6 wherein the laminate is provided on the inner surface of the metal substrate, wherein the metal substrate is piping, a pipe or a duct.

## Patentansprüche

**1.** Schmelzbarer Fluorharzprimer, umfassend Tetrafluorethylen/Hexafluorpropylen-Copolymer (FEP)-Teilchen, ein wärmebeständiges Harz, ein nichtionisches Tensid, ein Tensid auf Basis von acetylenischem Diol und Wasser, wobei:

die FEP-Teilchen eine durchschnittliche Teilchengröße von 10 bis 60 μm aufweisen, wobei die durchschnittliche Teilchengröße eine volumenmedian Teilchengröße, wie durch ein Laserbeugungsverfahren gemessen, ist;

das wärmebeständige Harz mindestens eines ist, das aus der Gruppe ausgewählt ist, die aus Polyamidimidharzen, Polyethersulfonharzen und Polyimidharzen besteht;
das Feststoffgehalt-Massenverhältnis zwischen den FEP-Teilchen und dem wärmebeständigen Harz 50:50 bis 95:5 beträgt;
das nichtionische Tensid ein Polyoxyethylenalkylether-Tensid ist; und
der schmelzbare Fluorharzprimer 10 bis 60 Massen-% Wasser, bezogen auf den schmelzbaren Fluorharzprimer, umfasst.

**2.** Schmelzbarer Fluorharzprimer nach Anspruch 1, wobei die FEP-Teilchen eine Schmelzflussrate von 0,1 bis 50 g/10 min, wie gemäß ASTM D2116 gemessen, aufweisen.

**3.** Schmelzbarer Fluorharzprimer nach einem der Ansprüche 1 oder 2, ferner umfassend 0,001 bis 5 Massen-% eines Wärmestabilisators, bezogen auf den Feststoffgehalt der FEP-Teilchen.

**4.** Primerfilm, gebildet aus dem schmelzbaren Fluorharzprimer nach einem der Ansprüche 1 bis 3.

**5.** Laminat mit einem Film, umfassend ein schmelzbares Perfluorpolymer, bereitgestellt auf dem Primerfilm nach Anspruch 4.

**6.** Beschichteter Gegenstand mit dem Laminat nach Anspruch 5, bereitgestellt auf einem Metallsubstrat.

**7.** Beschichteter Gegenstand nach Anspruch 6, wobei das Laminat auf der Innenfläche des Metallsubstrats bereitgestellt ist, wobei das Metallsubstrat eine Rohrleitung, ein Rohr oder ein Kanal ist.

## Revendications

**1.** Apprêt en résine fluorée fusible comprenant des particules de copolymère de tétrafluoroéthylène/hexafluoropropylène (FEP), une résine résistante à la chaleur, un tensioactif non ionique, un tensioactif à base de diol acétylénique et de l'eau, dans lequel :

les particules FEP ont une taille moyenne des particules de 10 à 60 μm, dans lequel la taille moyenne des particules est une taille moyenne des particules en volume, mesurée par un procédé de diffraction laser ;
la résine résistante à la chaleur est une ou plusieurs résines dans le groupe constitué de résines polyamide-imide, résines de polyéthersulfone et résines de polyimide ;
le rapport massique de la teneur en solides entre les particules FEP et la résine résistante à la chaleur est 50:50 à 95:5 ;
le tensioactif non ionique est un tensioactif d'éther d'alkyle de polyoxyéthylène ; et
l'apprêt en résine fluorée fusible comprend 10 à 60 % en masse d'eau sur la base de l'apprêt en résine fluorée fusible.

**2.** Apprêt en résine fluorée fusible selon la revendication 1, dans lequel les particules FEP ont un indice de fluidité à chaud de 0,1 à 50 g/10 mn, mesuré selon ASTM D2116.

**3.** Apprêt en résine fluorée fusible selon l'une quelconque des revendications 1 ou 2, comprenant en outre 0,001 à 5 % en masse d'un stabilisant thermique sur la base de la teneur en solides des particules FEP.

**4.** Film d'apprêt formé à partir de l'apprêt en résine fluorée fusible selon l'une quelconque des revendications 1 à 3.

**5.** Stratifié ayant un film comprenant un perfluoropolymère fusible fourni sur le film d'apprêt selon la revendication 4.

**6.** Article revêtu ayant le stratifié selon la revendication 5, fourni sur un substrat métallique.

**7.** Article revêtu selon la revendication 6, dans lequel le stratifié est fourni sur la surface intérieure du substrat métallique, dans lequel le substrat métallique est une tuyauterie, un tuyau ou une canalisation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6264000 A
- JP 2010083924 A
- JP 6753546 B
- US 5922468 A